# EUROPÄISCHE PATENTSCHRIFT

(11) **EP 0 938 163 B1**
(45) Veröffentlichungstag und Bekanntmachung des Hinweises auf die Patenterteilung: **27.04.2005**
(21) Anmeldenummer: 99101294.9
(22) Anmeldetag: 25.01.1999
(51) Int. Cl.: H01R 13/639

(54) **Kabelendverzweiger für die Telekommunikations- und Datentechnik**
Cable end branching element for telecommunication and data technology
Boitier de raccordement pour l'extrémité d'un cable de télécommunication et de transmission de données

(30) Priorität: 20.02.1998 DE 19807293
(43) Veröffentlichungstag der Anmeldung: 25.08.1999
(73) Patentinhaber: KRONE GmbH, 14167 Berlin (DE)
(72) Erfinder: Radelow, Wolfgang, 12357 Berlin (DE); Taybl, Christa, 14197 Berlin (DE)

(56) Entgegenhaltungen:
- WO-A-84/00446
- US-A- 4 846 735
- US-A- 5 057 034

## Beschreibung

Die Erfindung bezieht sich auf einen Kabelendverzweiger für die Telekommunikations- und Datentechnik gemäß dem Oberbegriff des Patentanspruches 1.

Kabelendverzweiger der gattungsgemäßen Art sind für die Telekommunikations- und Datentechnik vielfältig bekannt.

Aus der US 4846735 die als nächstliegender Stand der Technik augesehen wird ist ein Gehäuse aus einer Grundplatte und einen Gehäusedeckel sowie zwei auf die Grundplatte montierte Anschlußleisten mit je zwei parallelen Reihen von Schneid-Klemm-Kontaktelementen zum Anschließen von System- und Teilnehmerkabeln bekannt. Nachteilig hierbei ist, daß bei geöffnetem Gehäusedeckel alle Schneid-Klemm-Kontaktelemente der beiden Anschlußleisten leicht zugänglich sind und somit von einer nicht zur Beschaltung des Kabelendverzweigers befugten Person verändert werden können.

Aus der US 5057034 ist eine weitere Verteilereinrichtung der gattungsgemäßen Art vorbekannt. Diese Verteilereinrichtung besteht aus einer Anschlussleiste und einem Halteteil, wobei die Anschlußleiste zum Anschluss der abgehenden Teilnehmerleitungen und das Halteteil zum Anschluss der Systemleitungen vorgesehen ist. Die abgehenden Teilnehmerleitungen sind hierbei von der Bedienungsseite frei zugänglich an den Anschlusselementen und angeschlossen. Die Systemleitungen werden von unten in das Halteteil hineingeführt und innerhalb des Halteteils an Fixierteilen kontaktiert. Erst beim Zusammensetzten der Anschlussleiste mit dem Halteteil werden die Teilnehmerleitungen mit den Systemleitungen verbunden, denn die Anschlusselemente und weisen am anderen Ende Schneidklemmkontakte auf, die in die Fixierteile eingreifen.

Nachteilig bei dieser Verteilereinrichtung ist es, dass die Systemleitungen im Inneren der Verteilereinrichtung angeschlossen sind und nur durch ein Auseinanderziehen der Gehäuseteile zugänglich sind.

Der Erfindung liegt die Aufgabe zugrunde, den vorbekannten Kabelendverzweiger im Hinblick auf eine Sicherung der Schneid-Klemm-Kontaktelemente der beiden Anschlußleisten vor unbefugtem Zugriff zu verbessern.

Zur Lösung dieser Aufgabe sieht die Erfindung vor gemäß Anspruch 1, daß im Gehäuse Mittel zum Sichern der Systemkabel, die an die inneren Reihen von Schneid-Klemm-Kontaktelementen der beiden Anschlußleisten angeschlossen sind, vor unbefugtem Zugriff zu schützen. Erfindungsgemäß werden somit noch im Inneren des Gehäuses, auch nach der Entfernung des Gehäusedeckels, Mittel zum Sichern ausschließlich der Systemkabel vor unbefugtem Zugriff angeordnet, wobei die Systemkabel an die inneren Reihen von Schneid-Klemm- Kontaktelementen der zwei Anschlußleisten angeschlossen sind. Somit kann der öffentliche Betreiber eines Telekommunikations- und Datennetzes die an die inneren Reihen von Schneid- Klemm-Kontaktelementen der beiden Anschlußleisten eines Kabelendverzweigers angeschlossenen Systemkabel gesondert sichern, ohne daß der private Benutzer der Telekommunikations- und Dateneinrichtungen an den Systemkabeln manipulieren kann.

Erfindungsgemäß sind als Mittel zum Sichern der Systemkabel auf der Grundplatte des Gehäuses zwei parallele, einen Kabelkanal bildende Trennwände und nahe der Außenseite beider Trennwände je eine Anschlußleiste angeordnet und der Kabelkanal ist mit einer verriegelbaren Abdeckung versehen, deren Längsränder zwischen die Trennwände des Kabelkanals und die Anschlußleisten derart eingreifen, daß die angrenzenden Schneid-Klemm-Kontaktelemente für die Systemkabel vor unbefugtem Zugriff gesichert sind. Somit wird innerhalb des Gehäuses des Kabelendverzweigers ein vor unbefugtem Zugriff gesicherter Kabelkanal mit einer verriegelbaren Abdeckung geschaffen, durch den hindurch die Systemkabel zu den inneren Reihen der Schneid-Klemm-Kontaktelemente der beiden Anschlußleisten zugeführt werden. Zusätzlich greifen die Längsränder der verriegelbaren Abdeckung zwischen die Trennwände des Kabelkanals und die Anschlußleisten derart ein, daß die angrenzenden Schneid-Klemm-Kontaktelemente für die Systemkabel vor unbefugtem Zugriff gesichert sind.

In weiterer Ausbildung der Erfindung weist die Abdeckung zwei U-förmig abgewinkelte Längsränder auf, deren äussere Stege die in den Kunststoffkörpern der Anschlußleisten ausgebildeten Klemmschlitze für die Schneid-Klemm-Kontaktelemente abdecken. Ferner weist die Abdeckung mehrere Aufnahmeöffnungen für in nahe den Außenseiten der Trennwände auf der Grundplatte angeordnete Stützen eingreifende Verriegelungsnocken auf.

Schließlich weisen die Kabelkanäle an beiden Enden steckbare Kabeldurchführungsplatten mit Ausbrüchen für Kabel auf. Auch weisen die Kabelkanäle an einem Ende Verlängerungen der Trennwände und am anderen Ende buchsenartige Aufnahmen zum Einstecken der Verlängerungen eines zweiten Gehäuses auf, wodurch ein gehäuseverbundenes System mehrerer Kabelendverzweiger geschaffen wird.

Weitere vorteilhafte Ausgestaltungen der Erfindung ergeben sich aus den weiteren Unteransprüchen.

Die Erfindung ist nachfolgend anhand eines in den Zeichnungen dargestellten Kabelendverzweigers für die Telekommunikations- und Datentechnik näher erläutert. es zeigen:

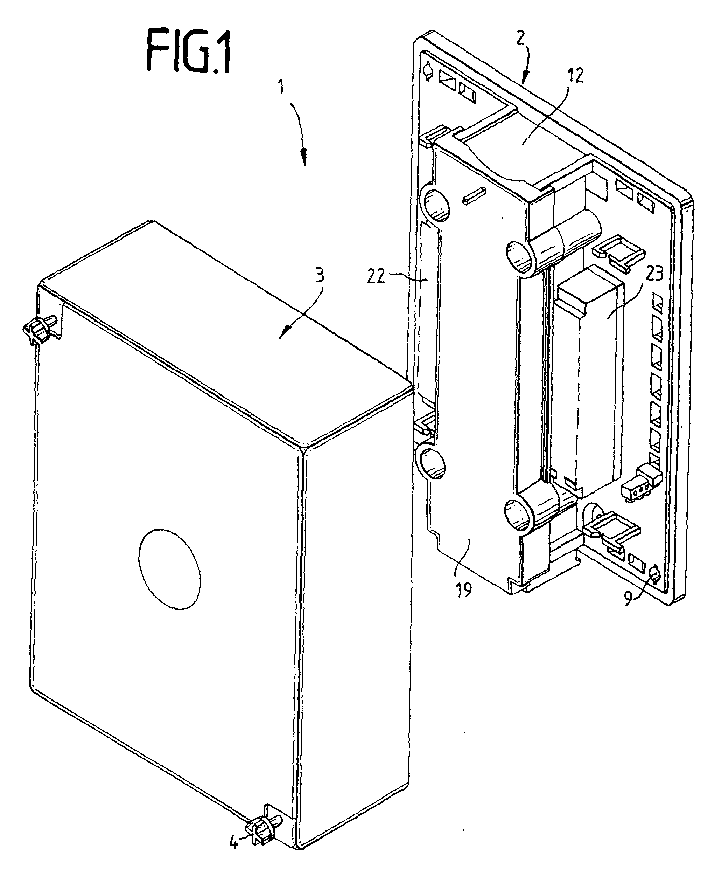

- Fig. 1: eine perspektivische Ansicht auf die Grundplatte des Gehäuses mit dem von der Grundplatte abgehobenen kastenförmigen Gehäusedeckel,
- Fig. 2: eine perspektivische Ansicht auf die Grundplatte des Gehäuses des Kabelendverzweigers und eine vom Kabelkanal abgehobene verriegelbare Abdeckung,
- Fig. 3: eine teilweise aufgebrochene Draufsicht auf das Gehäuse und die Grundplatte,
- Fig. 4: einen Querschnitt durch das Gehäuse gemäß Fig. 3,
- Fig. 5: einen Längsschnitt durch das Gehäuse gemäß Fig. 3,
- Fig. 6: eine perspektivische Ansicht der einen Stirnseite des Gehäuses,
- Fig. 7: eine perspektivische Ansicht der anderen Stirnseite des Gehäuses,
- Fig. 8: eine perspektivische Draufsicht auf einen Gehäuseverbinder und einen davon abgehobenen Deckel,
- Fig. 9: eine Draufsicht auf den Gehäuseverbinder gemäß Fig. 8,
- Fig. 10: eine Draufsicht auf zwei unmittelbar zusammengekoppelte Kabelendverzweiger,
- Fig. 11: eine Draufsicht auf vier unter Zwischenschaltung eines Gehäuseverbinders sternförmig zusammengekoppelte Kabelendverzweiger und
- Fig. 12: eine Draufsicht auf eine Mehrzahl von unter zur Hilfenahme von Gehäuseverbindern zusammengekoppelte Kabelendverzweiger.

Der Kabelendverzweiger für die Telekommunikations- und Datentechnik umfaßt ein Gehäuse 1 aus einer Grundplatte 2 und einem kastenförmigen Gehäusedeckel 3, der mittels in zwei diagonal gegenüberliegenden Eckpunkten angeordneter Verschlußelemente 4, die in Öffnungen 9 in diametral gegenüberliegenden Ecken der Grundplatte 2 eingreifen, mit der Grundplatte 2 abgedichtet verbindbar ist. Auf der Innenseite der Grundplatte 2 sind zwei parallele Trennwände 5, 6 einstückig mit der Grundplatte 2 aus Kunststoff ausgebildet, die zwischen sich einen Kabelkanal 7 bilden. Die Trennwände 5, 6 sind auf ihren Oberseiten mit senkrecht zur Grundplatte 2 gerichteten kurzen Schlitzen 8 zur Durchführung von nicht dargestellten Systemkabeln ausgebildet. Der Kabelkanal 7 ist an beiden Enden mit in den Trennwänden 5, 6 ausgebildeten U-förmigen Führungen 10, 11 geführten Platten 12, 13 zur Kabeldurchführung versehen, die mit Öffnungen 28 bzw. 30 für die nicht dargestellten Systemkabel versehen sind. Der Kabelkanal 7 weist an seinem einen, mit der Platte 13 versehenen Ende Verlängerungsstege 14 der Trennwände 5, 6 und an seinem anderen, mit der anderen Platte 12 versehenen Ende eine buchsenartige Aufnahme 15 zum Einstecken der Verlängerungsstege 14 eines zweiten Gehäuses 1 auf, wie es später noch näher erläutert werden wird.

Nahe den Außenseiten der Trennwände 5, 6 und nahe den Platten 12, 13 sind säulenartige Stützen 16 auf der Grundplatte 2 angeordnet und mit dieser einstückig aus Kunststoff ausgebildet. In den Oberseiten der Stützen 16 sind Schlitze 17 ausgebildet, in denen Verriegelungsnocken 18 in später noch beschriebener Weise einrastbar sind.

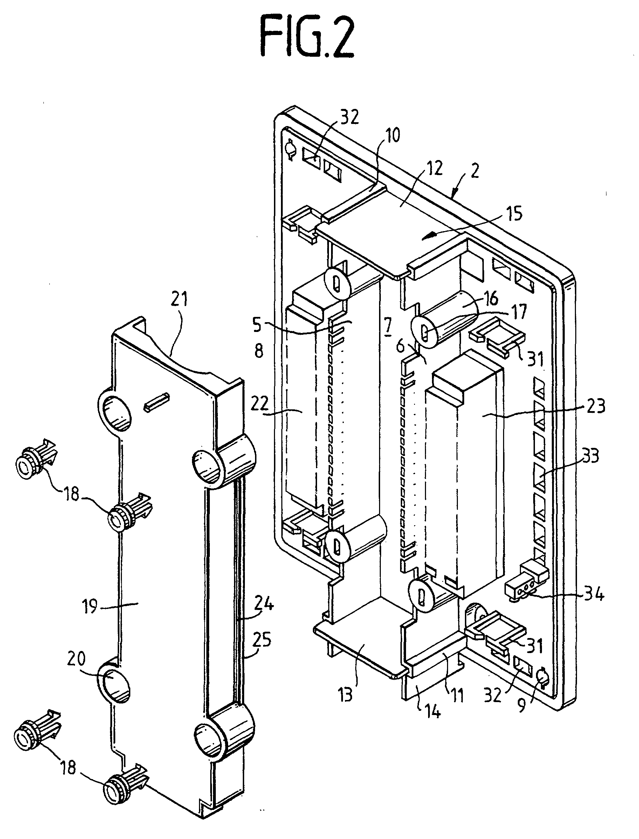

Der Kabelkanal 7 ist auf seiner Oberseite mittels einer in Fig. 2 abgehoben dargestellten Abdeckung 19 aus Kunststoff verschließbar, die auf ihren Außenseiten nahe den stirnseitigen Enden jeweils eingeformte Aufnahmeöffnungen 20 mit Durchgangsöffnungen für die Verriegelungsnocken 18 aufweist. Die stirnseitigen Enden der Abdeckung 19 sind mit Ausnehmungen 21 versehen, die bei verriegelt aufgerasteter Abdeckung 19 mit den Platten 12, 13 für die Kabeldurchführung zusammenwirken.

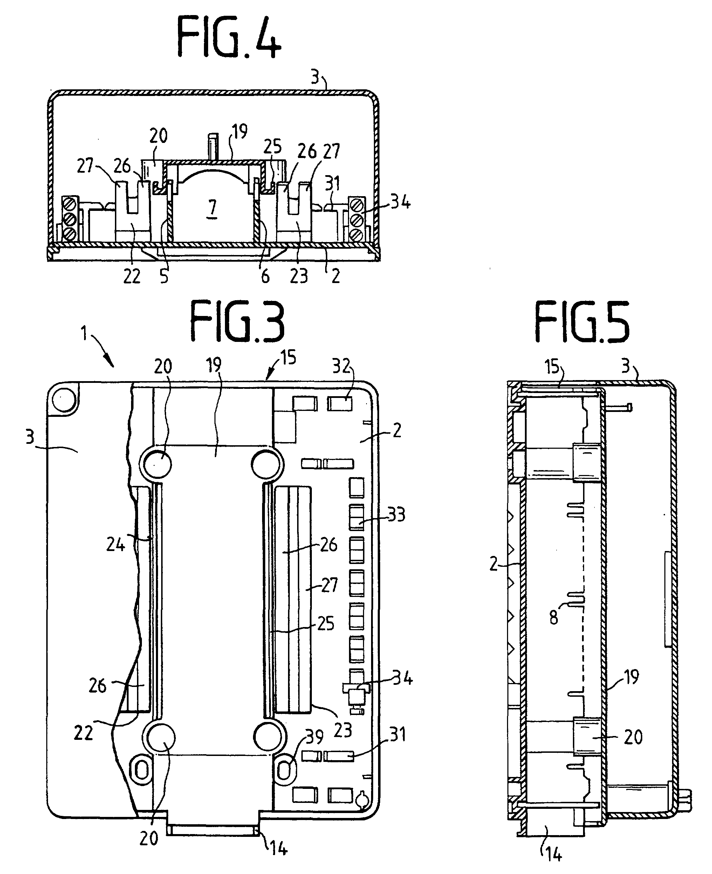

Nahe den Außenseiten beider Trennwände 5, 6 sind auf die Grundplatte 2 des Gehäuses 1 je eine Anschlußleiste 22, 23 aufmontiert, die auch als Trennleisten ausgebildet sein können. Die Anschlußleisten 22, 23 weisen in bekannter Weise in zwei parallelen Reihen 26, 27 in Klemmschlitzen angeordnete, nicht gezeigte Schneid-Klemm-Kontaktelemente zum Anschließen von nicht dargestellten System- und Teilnehmerkabeln auf, wobei die Systemkabel an den inneren Reihen 26 der Schneid-Klemm-Kontaktelemente der Anschlußleisten 22, 23 nahe den Trennwänden 5, 6 angeschlossen sind. Die Längsränder 24 der Abdeckung 19 greifen zwischen die Trennwände 5, 6 des Kabelkanals 7 und die Anschlußleisten 22, 23 derart ein, daß die angrenzenden Schneid-Klemm- Kontaktelemente für die Systemkabel durch die Längsränder 24 als Mittel zum Sichern der Systemkabel vor unbefugtem Zugriff gesichert sind. Hierzu sind die Längsränder 24 U-förmig abgewinkelt, wobei die äußeren Stege 25 die in den Kunststoffkörpern der Anschlußleisten 22, 23 ausgebildeten, nicht gezeigten Klemmschlitze für die Schneid-Klemm-Kontaktelemente abdecken, wie es in der Schnittdarstellung gemäß Fig. 4 dargestellt ist.

In Fig. 4 sind die beiden Anschlußleisten 22, 23 gezeigt, die parallel zu und dicht an den Außenseiten der den Kabelkanal 7 bildenden und begrenzenden Trennwände 5, 6 auf die Grundplatte 2 aufmontiert sind. Die jeweilige innere Reihe 26 von Schneid-Klemm-Kontaktelementen der beiden Anschlußleisten 22, 23 dient zum Anschluß der Systemkabel, die durch den Kabelkanal 7 hindurch zugeführt und durch die Schlitze 8 in den Trennwänden 5, 6 der inneren Reihe 26 von Schneid-Klemm-Kontaktelementen der Anschlußleisten 22, 23 zugeführt sind. Die den Kabelkanal 7 nach oben vor unbefugtem Zugriff sichernde Abdeckung 19 greift mit ihren U-förmig ausgebildeten Längsrändern 24 und mit den zu diesen gehörenden äußeren Stegen 25 zwischen die Außenseiten der Trennwände 5, 6 und die angrenzenden Reihen 26 der Schneid-Klemm-Kontaktelemente der beiden Anschlußleisten 22, 23 ein, so daß die hier angeschlossenen Systemkabel unzugänglich vor unbefugtem Zugriff gesichert sind. Insbesondere kann ein handelsübliches Anschlußwerkzeug, mit welchem auf die Oberseite der Anschlußleisten 22, 23 gedrückt wird, wobei die Systemkabel in die Schneid-Klemm-Kontaktelemente eingedrückt werden, nicht mehr benutzt werden, da der zwischen den Trennwänden 5, 6 des Kabelkanals 7 und der innneren Reihe 26 von Schneid-Klemm-Kontaktelementen vorhandene Raum nicht zum Einsetzen eines Teils des Anschlußwerkzeuges zur Verfügung steht. Die Abdekkung 19 ist mittels der in die Schlitze 17 der Stützen 16 eingreifenden Verriegelungsnocken 18 gesichert, die nur mit einem Spezialwerkzeug entfernbar und damit vor unbefugtem Zugriff gesichert sind. Die Ausnehmungen 21 der Stirnseiten der Abdeckung 19 halten die Platten 12 13 für die Kabeldurchführung in ihren Führungen 10,11.

Auf der Oberseite der Grundplatte 2 sind jeweils in den Eckbereichen vier rahmenartige, geschlitzte Kabelführungen 31 zur Bündelung der nicht dargestellten Teilnehmerkabel angeordnet, welche durch die Öffnungen 32, 33 an den Ober- und Unterseiten bzw. Randseiten der Grundplatte 2 hindurchführbar und dort mittels nicht gezeigter Kablebinder festlegbar sind. Erdanschlüsse 34 dienen als Außen- und Kabelerder für den Überspannungsschutz.

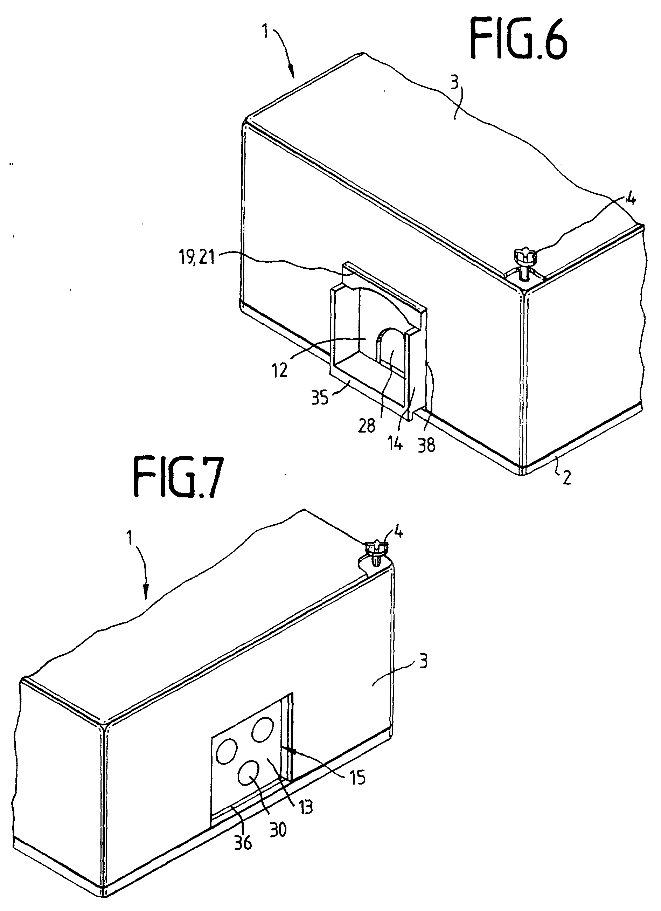

Die Fig. 6 zeigt die eine Stirnseite des Gehäuses 1 aus Gehäusedeckel 3 und Grundplatte 2 mit den herausragenden Verlängerungsstegen 14 der Trennwände 5, 6 und dem stirnseitigen Ende 21 der Abdeckung 19, die von einem U-förmigen Freischnitt 38 des Gehäusedeckels 2 umgeben sind. In der Platte 12 für die Kabeldurchführung ist eine Öffnung 28 zur Durchführung der Systemkabel angeordnet. Die Fig. 7 zeigt die andere Stirnseite des Gehäuses 1 aus Gehäusedeckel 3 und Grundplatte 2 mit der buchsenartigen Aufnahme 15 und der anderen Platte 13 zur Kabeldurchführung mit Durchgangsöffnungen 30 für die Systemkabel. In die Aufnahme 15, die zwischen den Endseiten der Trennwände 5,6 ausgebildet ist, können die Verlängerungsstege 14 der Trennwände 5,6, die am anderen Ende der Grundplatte 2 ausgebildet sind, passend eingreifen, wobei ein die beiden Verlängerungsstege 14 verbindender, unterer Querrand 35 der einen Stirnseite der Grundplatte 2 des einen Gehäuses 1 in eine Quernut 36 im Bodenbereich der Aufnahme 15 in der anderen Stirnseite der Bodenplatte 2 eines anschließenden Gehäuses 1 eingreift.

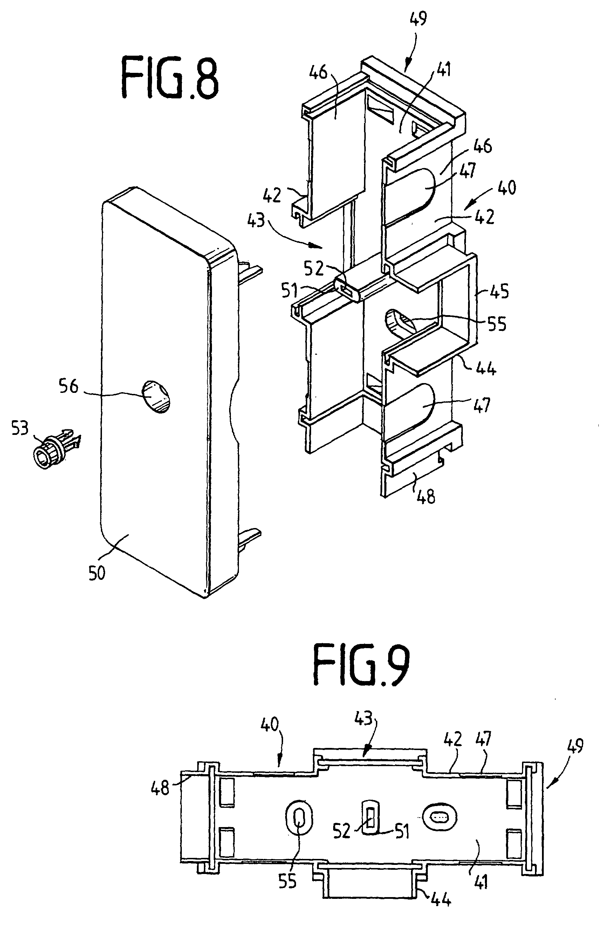

Die Fig. 8 und 9 zeigen einen Gehäuseverbinder 40 aus Kunststoff, bestehend aus einer Bodenplatte 41 und parallelen Seitenwänden 42, in deren Längsmittelbereich in entsprechender Weise wie an den stirnseitigen Enden des Kabelkanals 7 der Grundplatte 2 des Gehäuses 1 auf einer Seite eine Aufnahme 43 und auf der gegenüberliegenden Seite parallel angeordnete Verlängerungsstege 44 mit einer deren Unterseite verbindenden Quernase 45 ausgebildet sind. Die weiteren Seitenwandteile 46 des Gehäuseverbinders 40 sind mit in der Materialstärke dünneren oder vorgeprägten Flächen 47 versehen, die zwecks Hindurchführung von Systemkabeln aufbrechbar sind. Die stirnseitigen Enden des Gehäuseverbinders 40 sind mit Verlängerungsstegen 48 bzw. einer Aufnahme 49 versehen, die entsprechend den Verlängerungsstegen 14, 44 bzw. den Aufnahmen 15, 43 des Gehäuses 1 bzw. des Gehäuseverbinders 40 ausgebildet sind.

Der Gehäuseverbinder 40 ist mittels eines Deckels 50 verschließbar. Zur Sicherung des Deckels 50 ist auf dem Boden des Gehäuseverbinders 40 eine Stütze 51 mit einem Schlitz 52 vorgesehen, in den ein Verriegelungsnocken 53 eingreift, der in eine Aufnahmeöffnung 54 im Zentrum des Deckels 50 einrastbar ist.

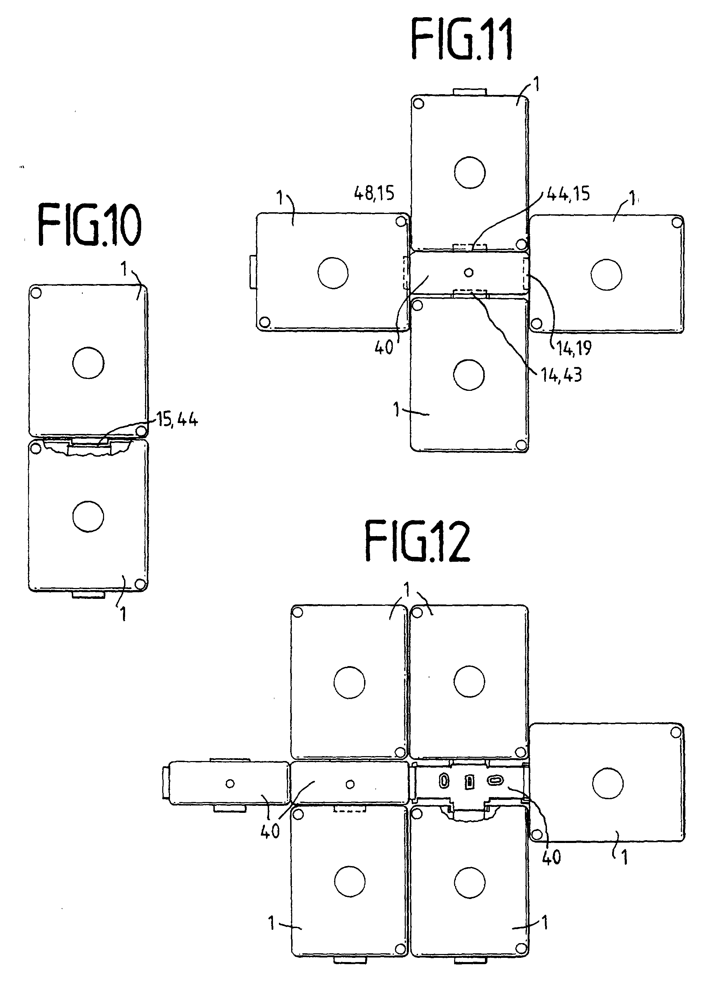

Wie es die Fig. 10 zeigt, können zwei Gehäuse 1 von Kabelendverzweigern mit ihren Grundplatten 2 und ihren Gehäusedeckeln 3 unmittelbar verbunden werden, wobei die Verlängerungsstege 14 der Trennwände 5, 6 des einen Gehäuses 1 unmittelbar in die Aufnahmen 15 des anderen Gehäuses 1 eingreifen.

Wie es Fig. 11 zeigt, können auch vier Kabelendverzweiger mit ihren Gehäusen 1 über einen Gehäuseverbinder 40 verbunden werden, wobei in entsprechender Weise die Verlängerungsstege 14 des unteren Gehäuses 1 in die Aufnahme 43 des Gehäuseverbinders 40 und dessen Verlängerungsstege 44 in die Aufnahme 15 des oberen Gehäuses 1 und die Verlängerungsstege 14 des rechten Gehäuses 1 in die stirnseitige Aufnahme 49 des Gehäuseverbinders 40 sowie dessen stirnseitige Verlängerungsstege 48 in die Aufnahme 15 des linken Gehäuses 1 eingreifen.

Die Fig. 12 zeigt die Anordnung von fünf und mehr Kabelendverzweigern, deren Gehäuse 1 mittels mehrerer Gehäuseverbinder 40 miteinander verbunden sind.

Sowohl die Grundplatte 2 des Gehäuses 1 als auch die Bodenplatte 41 des Gehäuseverbinders 40 sind mit Durchgangsöffnungen 39 bzw. 55 zur Wandmontage versehen.

### BEZUGSZEICHENLISTE

- 1: Gehäuse
- 2: Grundplatte
- 3: Gehäusedeckel
- 4: Verschlußelement
- 5: Tennwand
- 6: Trennwand
- 7: Kabelkanal
- 8: Schlitz
- 9: Öffnung
- 10: Führung
- 11: Führung
- 12: Platte
- 13: Platte
- 14: Verlängerungssteg
- 15: Aufnahme
- 16: Stütze
- 17: Schlitz
- 18: Verriegelungsnocken
- 19: Abdeckung
- 20: Aufnahmeöffnung
- 21: Ausnehmung
- 22: Anschlußleiste
- 23: Anschlußleiste
- 24: Längsrand
- 25: Steg
- 26: innere Reihe von Schneid-Klemm-
- 27: äußere Reihe / Kontaktelementen
- 28: Öffnung
- 29: Öffnung
- 30: Öffnung
- 31: Kabelführung
- 32: Öffnung
- 33: Öffnung
- 34: Erdanschluß
- 35: Querrand
- 36: Quernut
- 37: Durchgangsöffnung
- 38: Freischnitt
- 39: Durchgangsöffnung
- 40: Gehäuseverbinder
- 41: Bodenplatte
- 42: Seitenwand
- 43: Aufnahme
- 44: Verlängerungssteg
- 45: Quernase
- 46: Seitenwandteil
- 47: Fläche
- 48: Verlängerungsteg
- 49: Aufnahme
- 50: Deckel
- 51: Stütze
- 52: Schlitz
- 53: Verriegelungsnocken
- 54: Aufnahmeöffnung
- 55: Durchgangsöffnung

## Patentansprüche

1. Kabelendverzweiger für die Telekommunikations- und Datentechnik, aus einem Gehäuse (1) mit einer Grundplatte (2) und einem Gehäusedeckel (3) sowie mit zwei auf die Grund- platte (2) montierten Anschlußleisten (22, 23) mit je 4 zwei parallelen Reihen (26) von Schneid-Klemm-Kontaktelementen zum Anschließen von System- und Teilnehmerkabeln,
**dadurch gekennzeichnet,**
**dass** im Gehäuse (1) eine verriegelbare Abdeckung (19) zum Sichern der Systemkabel an die inneren Reihen (26) von Schneid-Klemm-Kontaktelementen der beiden Anschlußleisten (22, 23) vor unbefugtem Zugriff angeordnet ist.

2. Kabelendverzweiger nach Anspruch 1, **dadurch gekennzeichnet, dass** zum Sichern der Systemkabel auf der Grundplatte (2) des Gehäuses (1) zwei parallele, einen Kabelkanal (7) bildende Trennwände (5, 6) und nahe der Außenseite beider Trennwände (5, 6) je eine Anschlußleiste (22, 23) angeordnet sind und dass der Kabelkanal (7) mit der verriegelbaren Abdeckung (19) versehen ist, deren Längsränder (24) zwischen die Trennwände (5, 6) des Kabelkanals (7) und die Anschlußleisten (22, 23) derart eingreifen, dass die angrenzenden Schneid-Klemm-Kontaktelemente für die Systemkabel vor unbefugtem Zugriff gesichert sind.

3. Kabelendverzweiger nach Anspruch 2, **dadurch gekennzeichnet, daß** die Abdeckung (19) zwei U-förmig abgewinkelte Längsränder (24) aufweist, deren äußere Stege (25) die in den Kunststoffkörpern der Anschlußleisten (22, 23) ausgebildeten Klemmschlitze für die Schneid-Klemm-Kontaktelemente abdecken.

4. Kabelendverzweiger nach Anspruch 2 oder 3, **dadurch gekennzeichnet, daß** die Abdeckung (19) mehrere Aufnahmeöffnungen (20) für in nahe den Außenseiten der Trennwände (5, 6) angeordnete Stützen (16) eingreifende Verriegelungsnocken (18) aufweist.

5. Kabelendverzweiger nach einem der Ansprüche 2 bis 4, **dadurch gekennzeichnet, daß** der Kabelkanal (7) an beiden Enden steckbare Platten (12, 13) mit Öffnungen (28, 30) zur Kabeldurchführung aufweisen.

6. Kabelendverzweiger nach einem der Ansprüche 2 bis 5, **dadurch gekennzeichnet, daß** der Kabelkanal (7) an einem Ende Verlängerungsstege (14) der Trennwände (5, 6) und am anderen Ende buchsenartige Aufnahmen (15) zum Einstecken der Verlängerungs stege (14) eines zweiten Gehäuses (1) aufweisen.

7. Kabelendverzweiger nach einem der Ansprüche 2 bis 6, **gekennzeichnet durch** einen mittels eines Deckels (50) verschließbaren Gehäuseverbinder (40) aus einer Bodenplatte (41) und parallelen Seitenwänden (42) mit Aufnahmen (43) und Verlängerungsstegen (44) sowie mit stirnseitigen Aufnahmen (49) und Verlängerungsstegen (48) zur Verbindung mehrerer Gehäuse (1) miteinander.

## Claims

1. Cable end junction for telecommunications and data technology, comprising a housing (1) having a base plate (2) and a housing cover (3) and having two connecting strips (22, 23) which are mounted on the base plate (2) and each have 4 two parallel rows (26) of insulation-displacement terminal contact elements for connection of system and subscriber cables
**characterized**
**in that** a lockable cover (19) is arranged in the housing (1) in order to protect the system cables on the inner rows (26) of insulation-displacement terminal contact elements of the two connecting strips (22, 23) against unauthorized access.

2. Cable end junction according to Claim 1, **characterized in that** two parallel separating walls (5, 6), which form a cable channel (7), are arranged on the base plate (2) of the housing (1), and one connecting strip (22, 23) is in each case arranged close to the outside of the two separating walls (5, 6) in order to secure the system cables on the base plate (2) of the housing (1), and **in that** the cable channel (7) is provided with a lockable cover (19), whose longitudinal edges (24) engage between the separating walls (5, 6) of the cable channel (7) and the connecting strips (22, 23) in such a way that the adjacent insulation-displacement terminal contact elements for the system cables are protected against unauthorized access.

3. Cable end junction according to Claim 2, **characterized in that** the cover (19) has two longitudinal edges (24) which are angled in a U-shape and whose outer webs (25) cover the clamping slots, which are formed in the plastic bodies of the connecting strips (22, 23), for the insulation-displacement terminal contact elements.

4. Cable end junction according to Claim 2 or 3, **characterized in that** the cover (19) has two or more retaining openings (20) for locking studs (18) which engage in supports (16) which are arranged in the vicinity of the outsides of the separating walls (5, 6).

5. Cable end junction according to one of Claims 2 to 4, **characterized in that** the cable channel (7) has plug-in panels (12, 13) at both ends with openings (28, 30) for cables to pass through.

6. Cable end junction according to one of Claims 2 to 5, **characterized in that** the cable channel (7) has lengthening webs (14) for the separating walls (5, 6) at one end and, at the other end, has socket-like holders (15) for insertion of the lengthening webs (14) of a second housing (1).

7. Cable end junction according to one of Claims 2 to 6, **characterized by** a housing connector (40) which can be closed by means of a cover (50) and comprises a base plate (41) and parallel side walls (42) with holders (43) and lengthening webs (44), as well as end holders (49) and lengthening webs (48) for connecting two or more housings (1) to one another.

## Revendications

1. Boîtier de raccordement pour l'extrémité d'un câble de télécommunication et de transmission de données, constitué d'un boîtier (1) avec une plaque de base (2) et un couvercle de boîtier (3) ainsi qu'avec deux blocs de connexion (22, 23) montés sur la plaque de base (2), avec à chaque fois 4 éléments de contact autodénudants en deux rangées parallèles (26), pour le raccordement de câbles de système et d'abonné,
**caractérisé en ce que**
l'on prévoit dans le boîtier (1) un recouvrement verrouillable (19) pour la fixation du câble de système sur les rangées internes (26) d'éléments de contact autodénudants des deux blocs de connexion (22, 23) pour empêcher un accès non autorisé.

2. Boîtier de raccordement pour l'extrémité d'un câble selon la revendication 1, **caractérisé en ce que** pour la fixation des câbles de système sur la plaque de base (2) du boîtier (1), on prévoit deux parois de séparation (5, 6) parallèles formant un conduit de câble (7) et à proximité du côté extérieur des deux parois de séparation (5, 6) à chaque fois un bloc de connexion (22, 23), et **en ce que** le conduit de câble (7) est pourvu du recouvrement verrouillable (19), dont les bords longitudinaux (24) viennent en prise entre les parois de séparation (5, 6) du conduit de câble (7) et les blocs de connexion (22, 23), de telle sorte que les éléments de contact autodénudants adjacents pour les câbles de système soient fixés pour empêcher un accès non autorisé.

3. Boîtier de raccordement pour l'extrémité d'un câble selon la revendication 2, **caractérisé en ce que** le recouvrement (19) présente deux bords longitudinaux (24) coudés en forme de U, dont les arêtes extérieures (25) recouvrent les fentes de serrage réalisées dans les corps en plastique des blocs de connexion (22, 23) pour les éléments de contact autodénudants.

4. Boîtier de raccordement pour l'extrémité d'un câble selon la revendication 2 ou 3, **caractérisé en ce que** le recouvrement (19) présente plusieurs ouvertures de logement (20) pour des cames de verrouillage (18) venant en prise dans des supports (16) disposés à proximité des côtés extérieurs des parois de séparation (5, 6).

5. Boîtier de raccordement pour l'extrémité d'un câble selon l'une quelconque des revendications 2 à 4, **caractérisé en ce que** le conduit de câble (7) présente des plaques (12, 13) pouvant être enfichées aux deux extrémités, avec des ouvertures (28, 30) pour le passage des câbles.

6. Boîtier de raccordement pour l'extrémité d'un câble selon l'une quelconque des revendications 2 à 5, **caractérisé en ce que** le conduit de câble (7) présente à une extrémité des arêtes de prolongement (14) des parois de séparation (5, 6) et à l'autre extrémité des logements en forme de douille (15) pour l'enfichage des arêtes de prolongement (14) d'un deuxième boîtier (1).

7. Boîtier de raccordement pour l'extrémité d'un câble selon l'une quelconque des revendications 2 à 6, **caractérisé par** un connecteur de boîtier (40) obturable au moyen d'un couvercle (50) constitué d'une plaque de fond (41) et de parois latérales parallèles (42) avec des logements (43) et des arêtes de prolongement (44) ainsi qu'avec des logements du côté frontal (49) et des arêtes de prolongement (48) pour la connexion de plusieurs boîtiers (1) les uns aux autres.
